# EUROPEAN PATENT APPLICATION

(11) **EP 4 389 235 A1**
(43) Date of publication of application: **26.06.2024**
(21) Application number: 22214900.7
(22) Date of filing: 20.12.2022
(51) Int. Cl.: A62C 3/07, A62C 3/16, H01M 10/613

(54) **A FIRE SAFETY AND EXTINGUISHING SYSTEM FOR AN ELECTRICAL ENERGY STORAGE SYSTEM**

(71) Applicant: VOLVO TRUCK CORPORATION, 405 08 Göteborg (SE)
(72) Inventor: SHARMA, Deepak, 412 58 GÖTEBORG (SE); SARKAR, Shantanu, 560034 BENGALURU (IN)
(74) Representative: Kransell & Wennborg KB

(57) **Abstract**

A fire safety and extinguishing system for an electrical energy storage system, comprising: at least one sensor for detecting a hot spot abnormality in the electrical energy storage system; a fire extinguisher installed inside a housing of the electrical energy storage system, wherein the fire extinguisher is configured to dispense an extinguishing agent when a hot spot abnormality in the electrical energy storage system is detected; a liquid separator arranged to receive an ethylene glycol and water mixture from a cooling reservoir, and to separate water from glycol, wherein an outlet of the liquid separator is fluidly connected to an inlet of the housing of the electrical energy storage system to provide pressurized extracted water to the fire extinguisher as the extinguishing agent.

## Description

### TECHNICAL FIELD

The disclosure relates generally to safety systems for electrical energy storge systems. In particular aspects, the disclosure relates to a fire safety and extinguishing system for an electrical energy storage system. The disclosure can be applied in stationary applications and in heavy-duty vehicles, such as trucks, buses, and construction equipment. Although the disclosure may be described with respect to a particular vehicle, the disclosure is not restricted to any particular vehicle.

### BACKGROUND

Electrical energy storages may store significant amount of energy. Due to the high energy contents, there is a potential risk of fire or thermal runaway in the electrical energy storages which may damage the electrical energy storages and cause hazardous situations for nearby people or object, or for example occupants of a vehicle carrying the electrical energy storage. It is therefore desirable to provide improvements with regards to preventing excessive heat development or fire in electrical energy storages.

### SUMMARY

According to a first aspect of the disclosure, there is provided a fire safety and extinguishing system for an electrical energy storage system, comprising: at least one sensor for detecting a hot spot abnormality in the electrical energy storage system; a fire extinguisher installed inside a housing of the electrical energy storage system configured, wherein the fire extinguisher is configured to dispense an extinguishing agent when a hot spot abnormality in the electrical energy storage system is detected; a liquid separator arranged to receive an ethylene glycol and water mixture from a cooling reservoir, and to separate water from glycol, wherein an outlet of the liquid separator is fluidly connected to an inlet of the housing of the electrical energy storage system to provide pressurized extracted water to the fire extinguisher as the extinguishing agent.

The first aspect of the disclosure may seek to reduce the risk of fires in electrical energy storage systems. A technical benefit may include increased safety for occupants and reduced risk of extensive damages to the electrical energy storage system, such as modules or packs of the electrical energy storage system adjacent to a detected hot spot abnormality.

In some examples, the system may comprise at least one chemical storage in the housing of the electrical energy storage system, the chemical storage holding a chemical that form a fire extinguishing agent in the form of a foam if mixed with water or an ethylene glycol and water mixture. A technical benefit may include improved suppression of a potential fire and increased protection for people and nearby component or objects.

In some examples, the fire extinguisher may comprise a set of chemical spray nozzles inside the housing, the chemical spray nozzles being connected to the at least one chemical storage to dispense the chemical inside the housing, the first extinguisher further comprising a set of nozzles configured to dispense water or an ethylene glycol and water mixture jointly with the chemical spray nozzles such that a fire extinguishing foam is provided inside the housing. A technical benefit is that the formation of the fire extinguishing foam is provided inside the housing which improves the coverage of the foam on the detected hot spot abnormality. That is, with the formation of the foam inside the housing, it is easier to reach the hot spot abnormality with the foam compared to forming the foam outside the housing. Furthermore, a more compact combined electrical energy storage system and fire extinguisher is then provided.

In some examples, the chemical storage may be a set of cartridges located in the fluid path inside each of a set of nozzles of the fire extinguisher configured to dispense water or an ethylene glycol and water mixture, wherein the water or ethylene glycol and water mixture is mixed with the chemical in the cartridges inside the nozzle so that the nozzle dispense a fire extinguishing foam as the extinguishing agent. A technical benefit is that the formation of the fire extinguishing foam is provided inside the housing which improves the coverage of the foam on the detected hot spot abnormality. That is, with the formation of the foam inside the housing, it is easier to reach the hot spot abnormality with the foam compared to forming the foam outside the housing. Furthermore, a more compact combined electrical energy storage system and fire extinguisher is then provided. With the cartridges, an even more compact system is provided compared to having separate lines for the chemical and the water or an ethylene glycol and water mixture.

In some examples, the system may comprise a set of sensors for detecting a hot spot abnormality in respective zones of the electrical energy storage system, each zone having associated fire extinguisher nozzles of the fire extinguisher to dispense a fire extinguishing agent, wherein only fire extinguisher nozzles associated with the zone where a hot spot abnormality is detected are activated to dispense a fire extinguishing agent. A technical benefit is that a hot spot abnormality may be more accurately targeted with fire extinguishing agent.

In some examples, fire extinguisher nozzles surrounding a zone of a hot spot abnormality are configured to be activated. Thus, the targeting may hereby be further improved.

In some examples, the nozzles of the fire extinguisher that dispense water or an ethylene glycol and water mixture are formed in cooling plates of the electrical energy storage system. Thereby, a technical benefit may be that the fire extinguisher is better integrated in the electrical energy storage system. Further, the nozzles may get closer to potential hot spot abnormalities by being integrated in the cooling plates.

In some examples, comprising a pump configured to pressurize at least the extracted water provided to the fire extinguisher.

In some examples, the pump may be configured to increase its pumping power in response to a detected hot spot abnormality. Thereby, the efficiency of the fire extinguisher may be improved.

In some examples, the pump may be arranged to pressurize a flow of ethylene glycol and water mixture into the cooling reservoir and cooling plates of a cooling system for the electrical energy storage system. A technical benefit may include that the efficiency of the fire extinguisher is further improved.

In some examples, the system may comprise a fluid line from the cooling reservoir to a three-way valve, and a fluid line from one outlet of the three-way valve to an inlet of the housing, and a fluid line from the three-way valve to the liquid separator. Thus, an efficient way to control the flow to either one of the housing and the liquid separator may be provided.

In some examples, the three-way valve may be controllable to selectively provide ethylene glycol and water mixture to the inlet of the housing and to the liquid separator. Thus, an efficient way to control the flow of ethylene glycol and water mixture to either one of the housing and the liquid separator may be provided.

In some examples, the at least one sensor may be one or more of a temperature sensor, a flame sensor, and a smoke detector.

In some examples, the fire extinguisher may be arranged to spray the fire extinguishing agent onto electrical energy storage cells of the electrical energy storage system. This may further improve the efficiency of the fire extinguisher.

In some examples, the electrical energy storage system may be a traction battery of a vehicle. However, the electrical energy storage system may equally well be a stationary electrical energy storage system.

In some examples, the system may comprise: at least one chemical storage in the housing of the electrical energy storage system, the chemical storage holding a chemical that form a fire extinguishing agent in the form of a foam if mixed with water or an ethylene glycol and water mixture, the fire extinguisher comprising a set of chemical spray nozzles inside the housing, the chemical spray nozzles being connected to the at least one chemical storage to dispense the chemical inside the housing, the first extinguisher further comprising and a set of nozzles configured to dispense water or an ethylene glycol and water mixture jointly with the chemical spray nozzles such that a fire extinguishing foam is provided inside the housing, or wherein the chemical storage is a set of cartridges located in the fluid path inside each of a set of nozzles of the fire extinguisher configured to dispense water or an ethylene glycol and water mixture, wherein the water or ethylene glycol and water mixture is mixed with the chemical in the cartridges inside the nozzle so that the nozzle dispense a fire extinguishing foam as the extinguishing agent, the system further comprising: set of sensors for detecting a hot spot abnormality in respective zones of the electrical energy storage system, each zone having associated fire extinguisher nozzles of the fire extinguisher to dispense a fire extinguishing agent, wherein only fire extinguisher nozzles surrounding the zone where a hot spot abnormality is detected are activated to dispense a fire extinguishing agent, wherein the nozzles of the fire extinguisher that dispense water or an ethylene glycol and water mixture are formed in cooling plates of the electrical energy storage system.

According to a second aspect, there is provided a vehicle comprising the fire safety and extinguishing system according to the first aspect.

According to a third aspect, there is provided a method for activating a fire safety and extinguishing system of an electrical energy storage system, comprising, detecting a hot spot abnormality in the electrical energy storage system; receiving, by a liquid separator, an ethylene glycol and water mixture from a cooling reservoir, separating, by the liquid separator, water from the ethylene glycol and water mixture, providing the extracted water to an inlet of the electrical energy storage system to provide the extracted water to a fire extinguisher installed inside a housing of the electrical energy storage system, as the extinguishing agent, dispensing, by the fire extinguisher, the extinguishing agent towards the detected hot spot abnormality.

The third aspect of the disclosure may seek to reduce the risk of fires in electrical energy storage systems. A technical benefit may include increased safety for occupants and reduced risk of extensive damages to the electrical energy storage system, such as modules or packs of the electrical energy storage system adjacent to a detected hot spot abnormality.

In one example, the method may comprise: receiving, by the fire extinguisher, water, or an ethylene glycol and water mixture, mixing, by the fire extinguisher, the water, or the ethylene glycol and water mixture with a chemical to form a fire extinguishing agent in the form of a foam, dispensing, by the fire extinguisher, the foam towards the detected hot spot abnormality. A technical benefit may include improved suppression of a potential fire and increased protection for people and nearby objects, and in some implementations occupants of a vehicle carrying the electrical energy storage.

In one example, the method may comprise: transmitting a message to a user interface indicating that hot spot abnormality is detected. A technical benefit may be that protection for people near the electrical energy storage system is improved.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary truck according to one example vehicle.
**FIG. 2** is a system diagram of a fire safety and extinguishing system 6 for an electrical energy storage system 2 according to one example.
**FIG. 3** illustrates electrical energy storage cells and cooling plates arranged inside a housing.
**FIG. 4** illustrates electrical energy storage cells, cooling plates, and a chemical storage arranged inside a housing.
**FIG. 5** illustrates electrical energy storage cells, cooling plates, and a chemical storage in the form of cartridges arranged inside a housing.
**FIG. 6** illustrates an electrical energy storage pack divided in zones.
**FIG. 7** is a flow-chart of a method for activating a fire safety and extinguishing system according to one example.
**FIG. 8** is a flow-chart of a method for activating a fire safety and extinguishing system according to one example.
**FIG. 9** is another view of **FIG. 2**, according to another example.

### DETAILED DESCRIPTION

Aspects set forth below represent the necessary information to enable those skilled in the art to practice the disclosure.

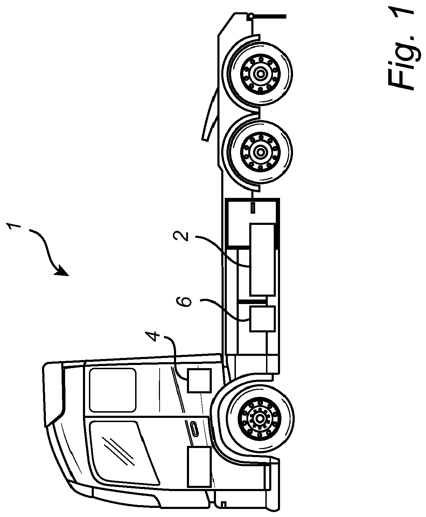

**FIG. 1** illustrates a vehicle in the form of an electrical truck 1 comprising a rechargeable propulsion electrical energy storage system 2 generally comprising a plurality of series and parallel connected electrical energy storage cells. The propulsion electrical energy storage 2 is arranged to provide power to an electrical engine (not shown) arranged for providing propulsion for the electrical truck 1. The electrical truck 1 further comprises an electrical energy storage managing system 4 which is configured to monitor electrical energy storage cell characteristics such as state of charge (SOC), state of health (SOH), state of power (SOP), state of energy (SOE), state of capacity (SOQ)., electrical energy storage voltage, state of resistance (SOR) i.e., internal impedance, and temperature of the electrical energy storage cells. The propulsion electrical energy storage system 2 may be a Li-ion electrical energy storage comprising multiple packs with cells electrically connected in series and in parallel.

The vehicle 1 comprises a fire safety and extinguishing system 6 to prevent fire in the electrical energy storage system 2 caused by thermal runaway or hotspots. However, the fire safety and extinguishing system disclosed herein is equally applicable to stationary applications.

Although the vehicle in **FIG. 1** is depicted as a heavy-duty truck, embodiments of the present disclosure may as well be implemented in other types of vehicles, such as in buses, light-weight trucks, passenger cars, construction equipment, industrial applications, and marine applications including e.g. vessels or ships.

Electrical energy storage systems may carry large amounts of energy but are also subject to rapid heat development in case of so-called thermal runaway or hotspot development. Once a hotspot occurs, a chemical chain reaction inside the battery causes the temperature in the battery to rise rapidly, which accelerates the chemical reaction and consequently also the temperature rise. This rate of temperature rise is excessively high and very difficult to stop once it starts. The temperature rise should preferably be stopped within a fraction of second in order to prevent a fire in the battery. The herein described fire safety and extinguishing system addresses this problem.

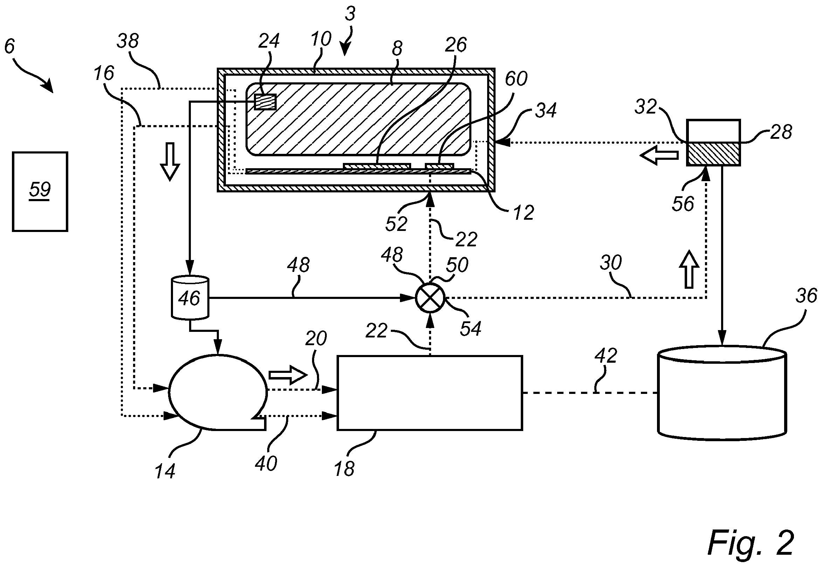

**FIG. 2** is a system diagram of a fire safety and extinguishing system 6 electrical energy storage system according to one example.

The electrical energy storage system includes a set of electrical energy storage packs 3 each comprising a plurality of electrical energy storage cells 8 generally stacked in parallel along a stacking direction. The cells 8 of a pack 3 are arranged inside a housing 10. The cells 8 are typically cooled by cooling plates 12 arranged inside the housing 10.

The electrical energy storage system 2 may be a traction battery of an electric vehicle that provides propulsion energy to the vehicles, or it may be a stationary battery for stationary applications.

To efficiently cool the cells 8 of the electrical energy storage pack 3, a cooling fluid is circulated through channels or ducts in the cooling plates 12. For this, a pump 14 is connected to the electrical energy storage system 2 via fluid line 16 to receive outlet cooling fluid, that is pumped to a cooling reservoir 18, e.g., a heat exchanger, to cool the relatively warmer cooling fluid received from the electrical energy storage pack 3. The pump and cooling reservoir 18 are fluidly connected by fluid line 20 for this purpose.

The cooling fluid reservoir 18 is fluidly connected to the electrical energy storage system 2 by fluid lines 22 so that cooled cooling fluid can be transported, under the pressure provided by the pump 14, back to the electrical energy storage pack 3 to cool its cells 8 via the cooling plates 12. The cooling plates 12 may generally be in contact with the cells 8, but are somewhat separated in the drawings to better distinguish different components.

The cooling fluid transported in the fluid lines 16, 20, 22 is an ethylene glycol and water mixture and form a cooling circuit for the electrical energy storage pack 3.

The fire safety and extinguishing system 6 comprises at least one sensor 24 for detecting a hot spot abnormality in the electrical energy storage pack 3. The at least one sensor 24 may be one or more of a temperature sensor, a flame sensor, and a smoke detector.

Furthermore, a fire extinguisher 26 is installed inside the housing 10 of the electrical energy storage system 2. Generally, the fire extinguisher 26 is configured to dispense an extinguishing agent when a hot spot abnormality in the electrical energy storage pack 3 is detected by the at least one sensor 24.

A liquid separator 28 is arranged to receive an ethylene glycol and water mixture from the cooling reservoir 18. For this, the liquid separator 28 is fluidly connected to the cooling reservoir 18 by fluid lines 30, 22. A liquid separator may be realized in different ways, but should be able to separate water from ethylene glycol in the ethylene glycol and water mixture received from the cooling reservoir 18. Example liquid separators include fractional distillation apparatuses and ultrafiltration apparatuses; however, these are only provided as examples and several other viable options are available.

An outlet 32 of the liquid separator 28 is fluidly connected to an inlet 34 of the housing 10 of the electrical energy storage pack 3 to provide pressurized extracted water to the fire extinguisher 26 as the extinguishing agent. That is, the fire extinguisher 26 uses the extracted water as the extinguishing agent.

The water that is circulated through the electrical energy storage pack 3 without being used as an extinguishing agent, i.e., that is not expelled out from the nozzles of the fire extinguisher 26, is circulated through outlet fluid line 38 connected to the electrical energy storage system 2, and to the pump 14. The pump 14 that pressurizes the fluid lines, pumps the water to the cooling reservoir 18 through fluid line 40.

More specially, the pump 14 is arranged to pressurize a flow of ethylene glycol and water mixture into the cooling reservoir 18 and cooling plates 12 of a cooling system for the electrical energy storage pack 3. That is, the fire safety and extinguishing system 6 is integrated with the cooling system of the electrical energy storage pack 3.

The extracted water provided to the fire extinguisher 26 is pressurized by the pump 14 through the fluid line 40. Note that two separate fluid lines transport water and the ethylene glycol and water mixture from the electrical energy storage pack 3 to the pump, and to the cooling reservoir. That is, a first fluid line 38 transport water to the cooling reservoir 18 and a second fluid line 16 transport ethylene glycol and water mixture to the cooling reservoir from the electrical energy storage pack 3.

The liquid separator 28 is fluidly connected to a container 36 where separated ethylene glycol may be stored. The separated ethylene glycol is recycled into the fluid lines where it is mixed with the water from the fluid line 38. For example, the ethylene glycol in the container 36 may be provided to the cooling reservoir 18 via fluid line 42 where it is mixed with the water from fluid lines 40 and 38.

In case a hot spot abnormality, such as smoke development, increased temperature or flame detection is detected by the at least one sensor 24, the pump 14 may be configured to increase its pumping power in response to the detected hot spot abnormality. For this, a processing device 46 or some simple logic 46 may receive a message indicating the detected hot spot abnormality from the sensor 24 and provide a control message to the pump 14 to increase its pumping power. Preferably, the pump 14 is controlled to set its maximum pumping power.

The example fire safety and extinguishing system 6 comprises a three-way valve 48 fluidly connected to the cooling reservoir 18 by the fluid line 22. One outlet 50 of the three-way valve 48 is fluidly connected with an inlet 52 of the housing 10 by fluid line 22. Fluid line 30 connected another outlet 54 of the three-way valve 40 to an inlet 56 of the liquid separator 28.

The three-way valve 48 is controllable by the processor device 46 to selectively provide ethylene glycol and water mixture to the inlet 52 of the housing 10 and to the liquid separator 56. That is depending on circumstances, the fire safety and extinguishing system 6 can decide whether or not the liquid separator should receive ethylene glycol and water mixture. The ethylene glycol and water mixture is circulated via the inlet 52 and lines 22, 16, 20, for normal cooling of the electrical energy storage system 2. However, in case of a detected hot spot abnormality or when the liquid separator 28 is in need of refill, the three-way valve 48 may be controlled to provide also the liquid separator with ethylene glycol and water mixture.

To enable the most efficient cooling of a hot spot abnormality, the fire extinguishing agent should be sprayed, by the fire extinguishing agent, directly onto electrical energy storage cells of the electrical energy storage pack 3.

In one example, the fire safety and extinguishing system 6 comprises at least one chemical storage 60 in the housing 10. The chemical storage 60 holds a chemical that form a fire extinguishing agent in the form of a foam if mixed with water or an ethylene glycol and water mixture. Some example chemicals include Aqueous Film Forming Foam (AFFF), or tetraoctyl ammonium 2-methyl-1-naphthoate, however many different options are available, and these example chemicals are purely provided as examples.

Furthermore, in case a spot abnormality is detected, a warning may be provided to a user interface 59, e.g., inside a cab of a vehicle 1, to warn the occupants of a potentially hazardous situation, or to a monitoring center for a stationary application.

In a further development, if a thermal runway is detected by a management system of the electrical energy storage system 2, for example including the processor device 46, by detecting abnormal behavior in measurements of voltage, current, temperature, pressure sensors installed in the modules/battery packs, the fire extinguisher 26 may be activated.

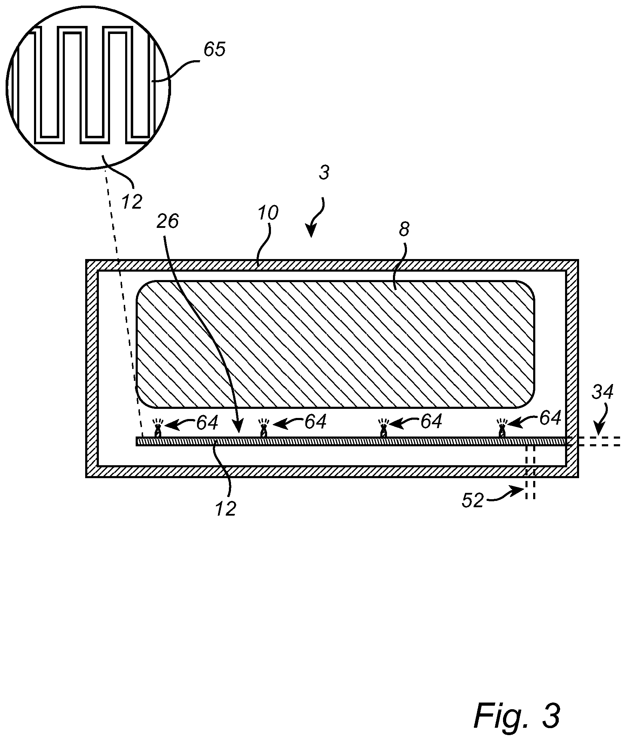

**FIG. 3** illustrates electrical energy storage cells 8 arranged inside the housing 10. One inlet 52 in the housing is connected to the cooling plate 12 to supply the cooling plate 12 with ethylene glycol and water mixture. Further, another inlet 34 in the housing supplies the cooling plate 12 with water from the liquid separator 28. Each cooling plate comprises channels 65 where the cooling fluid, the water from inlet 34 in one channel and the ethylene glycol and water mixture in another channel. Alternatively, some cooling plates only receive ethylene glycol and water mixture from inlet 52 and no water from inlet 3, and other cooling plates receive only water from inlet 34 and no ethylene glycol and water mixture from inlet 52. Thus, there may be water dedicated cooling plates and ethylene glycol and water mixture dedicated cooling plates. The nozzles 64 are fluidly connected to receive fluid from the channels 65. The nozzles 64 may be made or attached in the cooling plate 12 directly in fluid contact with the channels 65.

The fire extinguisher 26 thereby comprises a cooling plate 12 and a set of nozzles 64 formed in the cooling plate 12. In this way, the pressurized water, or ethylene glycol and water mixture, is dispensed, under the pressure provided by the pump 14, on the cells 8 of the electrical energy storage pack 3.

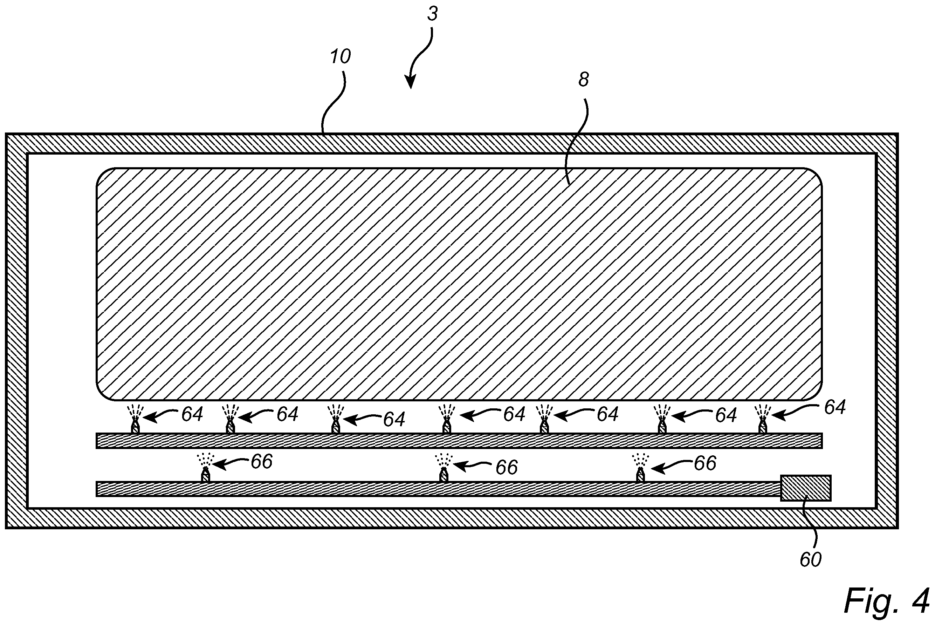

**FIG. 4** illustrates electrical energy storage cells 8 arranged inside the housing 10, and further a set of chemical spray nozzles 66 inside the housing. The chemical spray nozzles 66 are connected to the at least one chemical storage 60 to dispense a chemical inside the housing 10. The chemical storage 60 is connected to the nozzles 66 via a supply line 68. The first extinguisher further comprising the set of nozzles 64 configured to dispense water or an ethylene glycol and water mixture. The nozzles 64 jointly dispense water or an ethylene glycol and water mixture with foam forming chemical being dispensed by the chemical spray nozzles 66 such that a fire extinguishing foam is provided inside the housing, on the cells 8. The chemical is pressurized by suitable pumps or other means. The nozzles 66 are configured to spray the foam forming chemical in response to that the sensor 24 detects a hot spot abnormality. For example, the processor device 46 may be configured to control the nozzles 24 in response to a detected hot spot abnormality.

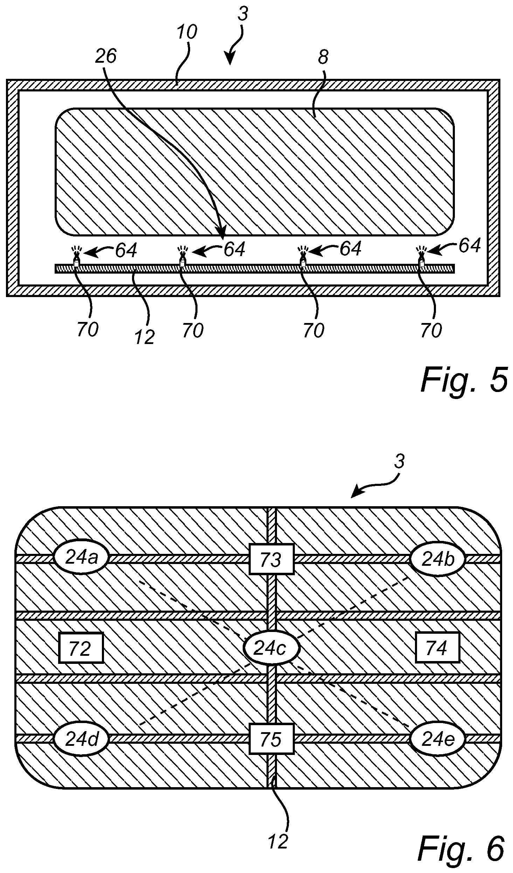

**FIG. 5** illustrates another example for forming a fire extinguishing foam inside the housing 10. In this example, a set of cartridges 70, that is chemical storages, are located in the nozzles 64, in the fluid path inside each of a set of nozzles 64 of the fire extinguisher 26. The nozzles 64 are configured to dispense water or an ethylene glycol and water mixture, and when this occurs, the water or ethylene glycol and water mixture is mixed with the chemical in the cartridges 70 inside the nozzle 64 so that the nozzle dispense a fire extinguishing foam as the extinguishing agent inside the housing 10 towards the cells 8. The cartridge 70 may be formed as part of the nozzle 64, for example with the nozzle 64 placed on top a cartage as one unit. The cartridge may be e.g., plastic that disrupts in response to the pressurized fluid form the nozzles 64, or the cartridge may be water soluble so that the chemical is released once in contact with water or ethylene glycol and water mixture.

**FIG. 6** illustrates an electrical energy storage pack 8 or module comprising a set of cells 8 separated by cooling plates 12, and a set of sensors, 24a, 24b, 24c, 24d, 24e. The sensors may be one or more of a temperature sensor, a flame sensor, and a smoke detector. The sensors 24a, 24b, 24c, 24d, 24e are configured to detect a hot spot abnormality in respective zones 72, 73, 74, 75 of the electrical energy storage system 3. One sensor may be associated with more than one zone. Further, each zone 72, 73, 74, 75 has associated fire extinguisher nozzles (not shown in fig. 6) of the fire extinguisher to dispense a fire extinguishing agent. Only fire extinguisher nozzles associated with the zone where a hot spot abnormality is detected are activated to dispense a fire extinguishing agent. For example, if a hot spot abnormality is detected in zone 73, then fire extinguishers associated with sensors 24a, 24b, and 24c may be controlled to dispense a fire extinguishing agent. Similarly, if a hot spot abnormality is detected in zone 74, then fire extinguishers associated with sensors 24b, 24c, and 24e may be controlled to dispense a fire extinguishing agent. If a hot spot abnormality is detected in zone 75, then fire extinguishers associated with sensors 24d, 24c, and 24e may be controlled to dispense a fire extinguishing agent. If a hot spot abnormality is detected in zone 72, then fire extinguishers associated with sensors 24a, 24c, and 24d may be controlled to dispense a fire extinguishing agent. Accordingly, fire extinguisher nozzles surrounding a zone of a hot spot abnormality are configured to be activated.

In one specific example, the system comprises: at least one chemical storage in the housing 10 of the electrical energy storage system2, the chemical storage holding a chemical that form a fire extinguishing agent in the form of a foam if mixed with water or an ethylene glycol and water mixture, the fire extinguisher 26 comprising a set of chemical spray nozzles inside the housing, the chemical spray nozzles being connected to the at least one chemical storage to dispense the chemical inside the housing 10, the first extinguisher 26 further comprising a set of nozzles configured to dispense water or an ethylene glycol and water mixture jointly with the chemical spray nozzles such that a fire extinguishing foam is provided inside the housing, or, wherein the chemical storage is a set of cartridges located in the fluid path inside each of a set of nozzles of the fire extinguisher configured to dispense water or an ethylene glycol and water mixture, wherein the water or ethylene glycol and water mixture is mixed with the chemical in the cartridges inside the nozzle so that the nozzle dispense a fire extinguishing foam as the extinguishing agent, the system further comprising: a set of sensors for detecting a hot spot abnormality in respective zones of the electrical energy storage system, each zone having associated fire extinguisher nozzles of the fire extinguisher to dispense a fire extinguishing agent, wherein only fire extinguisher nozzles surrounding the zone where a hot spot abnormality is detected are activated to dispense a fire extinguishing agent, wherein the nozzles of the fire extinguisher that dispense water or an ethylene glycol and water mixture are formed in cooling plates of the electrical energy storage system.

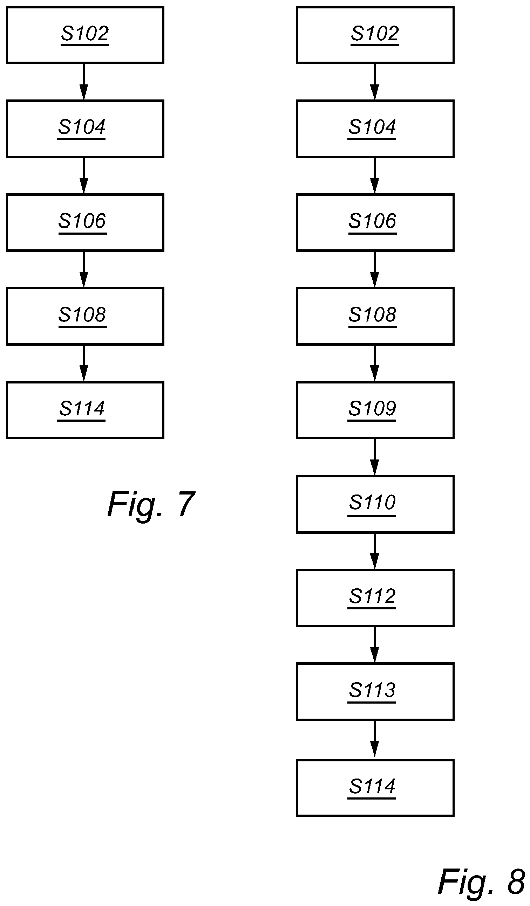

**FIG. 7** is a flow-chart of a method for activating a fire safety and extinguishing system of an electrical energy storage system according to one example.

The method comprises, in step S102, detecting a hot spot abnormality in the electrical energy storage system by a sensor.

In step S104, receiving, by a liquid separator, an ethylene glycol and water mixture from a cooling reservoir.

In step S106, separating, by the liquid separator, water from the ethylene glycol and water mixture.

In step S108, providing the extracted water to an inlet of the electrical energy storage system to provide the extracted water to a fire extinguisher installed inside a housing of the electrical energy storage system, as the extinguishing agent.

In step S114, dispensing, by the fire extinguisher, the extinguishing agent towards the detected hot spot abnormality.

**FIG. 8** is a flow-chart of a method for activating a fire safety and extinguishing system of an electrical energy storage system according to one example.

In addition to the steps of **FIG. 7**, **FIG. 8** further includes step S109 of receiving, by the fire extinguisher, water, or an ethylene glycol and water mixture.

Step S110 comprises mixing, by the fire extinguisher, the water, or the ethylene glycol and water mixture with a chemical to form a fire extinguishing agent in the form of a foam.

In step S112, dispensing, by the fire extinguisher, the foam towards the detected hot spot abnormality.

Further, step S113 includes transmitting a message to a user interface indicating that a hot spot abnormality is detected.

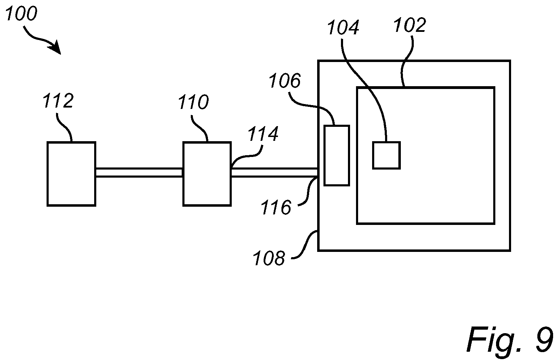

**FIG. 9** is another view of **FIG. 2**, according to another example. **FIG. 9** illustrates a fire safety and extinguishing system 100 for an electrical energy storage system 102, comprising: at least one sensor 104 for detecting a hot spot abnormality in the electrical energy storage system 102. A fire extinguisher 106 installed inside a housing 108 accommodating the electrical energy storage system 102, wherein the fire extinguisher 106 is configured to dispense an extinguishing agent when a hot spot abnormality in the electrical energy storage system 102 is detected; a liquid separator 110 arranged to receive an ethylene glycol and water mixture from a cooling reservoir 112, and to separate water from glycol, wherein an outlet 114 of the liquid separator 110 is fluidly connected to an inlet 116 of the electrical energy storage system 102 housing 108 to provide pressurized extracted water to the fire extinguisher as the extinguishing agent.

Example 1: A fire safety and extinguishing system for an electrical energy storage system, comprising: at least one sensor for detecting a hot spot abnormality in the electrical energy storage system; a fire extinguisher installed inside a housing of the electrical energy storage system, wherein the fire extinguisher is configured to dispense an extinguishing agent when a hot spot abnormality in the electrical energy storage system is detected; a liquid separator arranged to receive an ethylene glycol and water mixture from a cooling reservoir, and to separate water from glycol, wherein an outlet of the liquid separator is fluidly connected to an inlet of the housing of the electrical energy storage system to provide pressurized extracted water to the fire extinguisher as the extinguishing agent.

Example 2: The fire safety and extinguishing system according to example 1, comprising at least one chemical storage in the housing of the electrical energy storage system, the chemical storage holding a chemical that form a fire extinguishing agent in the form of a foam if mixed with water or an ethylene glycol and water mixture.

Example 3: The fire safety and extinguishing system according to example 2, the fire extinguisher comprising a set of chemical spray nozzles inside the housing, the chemical spray nozzles being connected to the at least one chemical storage to dispense the chemical inside the housing, the first extinguisher further comprising a set of nozzles configured to dispense water or an ethylene glycol and water mixture jointly with the chemical spray nozzles such that a fire extinguishing foam is provided inside the housing.

Example 4: The fire safety and extinguishing system according to example 2, wherein the chemical storage is a set of cartridges located in the fluid path inside each of a set of nozzles of the fire extinguisher configured to dispense water or an ethylene glycol and water mixture, wherein the water or ethylene glycol and water mixture is mixed with the chemical in the cartridges inside the nozzle so that the nozzle dispense a fire extinguishing foam as the extinguishing agent.

Example 5: The fire safety and extinguishing system according to any of examples 1-4, comprising a set of sensors for detecting a hot spot abnormality in respective zones of the electrical energy storage system, each zone having associated fire extinguisher nozzles of the fire extinguisher to dispense a fire extinguishing agent, wherein only fire extinguisher nozzles associated with the zone where a hot spot abnormality is detected are activated to dispense a fire extinguishing agent.

Example 6: The fire safety and extinguishing system according to example 5, wherein fire extinguisher nozzles surrounding a zone of a hot spot abnormality are configured to be activated.

Example 7: The fire safety and extinguishing system according to any of examples 1-7, wherein the nozzles of the fire extinguisher that dispense water or an ethylene glycol and water mixture are formed in cooling plates of the electrical energy storage system.

Example 8: The fire safety and extinguishing system according to any of examples 1-7, comprising a pump configured to pressurize at least the extracted water provided to the fire extinguisher.

Example 9: The fire safety and extinguishing system according to example 8, wherein the pump is configured to increase its pumping power in response to a detected hot spot abnormality.

Example 10: The fire safety and extinguishing system according to any of examples 8-9, wherein the pump is arranged to pressurize a flow of ethylene glycol and water mixture into the cooling reservoir and cooling plates of a cooling system for the electrical energy storage system.

Example 11: The fire safety and extinguishing system according to any of examples 1-10, comprising a fluid line from the cooling reservoir to a three-way valve, and a fluid line from one outlet of the three-way valve to an inlet of the housing, and a fluid line from the three-way valve to the liquid separator.

Example 12: The fire safety and extinguishing system according to example 11, the three-way valve being controllable to selectively provide ethylene glycol and water mixture to the inlet of the housing and to the liquid separator.

Example 13: The fire safety and extinguishing system according to any of examples 1-12, the at least one sensor being one or more of a temperature sensor, a flame sensor, and a smoke detector.

Example 14: The fire safety and extinguishing system according to any of examples 1-13, wherein the fire extinguisher is arranged to spray the fire extinguishing agent onto electrical energy storage cells of the electrical energy storage system.

Example 15: The fire safety and extinguishing system according to any of examples 1-14, wherein the electrical energy storage system is a traction battery of a vehicle.

Example 16: The fire safety and extinguishing system according to example 1, the system comprising: at least one chemical storage in the housing of the electrical energy storage system, the chemical storage holding a chemical that form a fire extinguishing agent in the form of a foam if mixed with water or an ethylene glycol and water mixture, the fire extinguisher comprising a set of chemical spray nozzles inside the housing, the chemical spray nozzles being connected to the at least one chemical storage to dispense the chemical inside the housing, the first extinguisher further comprising a set of nozzles configured to dispense water or an ethylene glycol and water mixture jointly with the chemical spray nozzles such that a fire extinguishing foam is provided inside the housing, or wherein the chemical storage is a set of cartridges located in the fluid path inside each of a set of nozzles of the fire extinguisher configured to dispense water or an ethylene glycol and water mixture, wherein the water or ethylene glycol and water mixture is mixed with the chemical in the cartridges inside the nozzle so that the nozzle dispense a fire extinguishing foam as the extinguishing agent, the system further comprising: set of sensors for detecting a hot spot abnormality in respective zones of the electrical energy storage system, each zone having associated fire extinguisher nozzles of the fire extinguisher to dispense a fire extinguishing agent, wherein only fire extinguisher nozzles surrounding the zone where a hot spot abnormality is detected are activated to dispense a fire extinguishing agent, wherein the nozzles of the fire extinguisher that dispense water or an ethylene glycol and water mixture are formed in cooling plates of the electrical energy storage system.

Example 17: A vehicle comprising the fire safety and extinguishing system according to any of examples 1-16.

Example 18: A method for activating a fire safety and extinguishing system of an electrical energy storage system, comprising, detecting a hot spot abnormality in the electrical energy storage system; receiving, by a liquid separator, an ethylene glycol and water mixture from a cooling reservoir, separating, by the liquid separator, water from the ethylene glycol and water mixture, providing the extracted water to an inlet of the electrical energy storage system to provide the extracted water to a fire extinguisher installed inside a housing of the electrical energy storage system, as the extinguishing agent, dispensing, by the fire extinguisher, the extinguishing agent towards the detected hot spot abnormality.

Example 19: The method according to example 18, comprising receiving, by the fire extinguisher, water, or an ethylene glycol and water mixture, mixing, by the fire extinguisher, the water, or the ethylene glycol and water mixture with a chemical to form a fire extinguishing agent in the form of a foam, dispensing, by the fire extinguisher, the foam towards the detected hot spot abnormality.

Example 20: The method according to any one of examples 18-19, comprising: transmitting a message to a user interface indicating that hot spot abnormality is detected.

The processor device may include any number of hardware components for conducting data or signal processing or for executing computer code stored in memory. The processor device (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A fire safety and extinguishing system for an electrical energy storage system, comprising:
at least one sensor for detecting a hot spot abnormality in the electrical energy storage system;
a fire extinguisher installed inside a housing of the electrical energy storage system, wherein the fire extinguisher is configured to dispense an extinguishing agent when a hot spot abnormality in the electrical energy storage system is detected;
a liquid separator arranged to receive an ethylene glycol and water mixture from a cooling reservoir, and to separate water from glycol, wherein an outlet of the liquid separator is fluidly connected to an inlet of the housing of the electrical energy storage system to provide pressurized extracted water to the fire extinguisher as the extinguishing agent.

2. The fire safety and extinguishing system according to claim 1, comprising at least one chemical storage in the housing of the electrical energy storage system, the chemical storage holding a chemical that form a fire extinguishing agent in the form of a foam if mixed with water or an ethylene glycol and water mixture.

3. The fire safety and extinguishing system according to claim 2, the fire extinguisher comprising a set of chemical spray nozzles inside the housing, the chemical spray nozzles being connected to the at least one chemical storage to dispense the chemical inside the housing, the first extinguisher further comprising a set of nozzles configured to dispense water or an ethylene glycol and water mixture jointly with the chemical spray nozzles such that a fire extinguishing foam is provided inside the housing.

4. The fire safety and extinguishing system according to claim 2, wherein the chemical storage is a set of cartridges located in the fluid path inside each of a set of nozzles of the fire extinguisher configured to dispense water or an ethylene glycol and water mixture, wherein the water or ethylene glycol and water mixture is mixed with the chemical in the cartridges inside the nozzle so that the nozzle dispense a fire extinguishing foam as the extinguishing agent.

5. The fire safety and extinguishing system according to any of claims 1-4, comprising a set of sensors for detecting a hot spot abnormality in respective zones of the electrical energy storage system, each zone having associated fire extinguisher nozzles of the fire extinguisher to dispense a fire extinguishing agent, wherein only fire extinguisher nozzles associated with the zone where a hot spot abnormality is detected are activated to dispense a fire extinguishing agent.

6. The fire safety and extinguishing system according to claim 5, wherein fire extinguisher nozzles surrounding a zone of a hot spot abnormality are configured to be activated.

7. The fire safety and extinguishing system according to any of claims 1-7, wherein the nozzles of the fire extinguisher that dispense water or an ethylene glycol and water mixture are formed in cooling plates of the electrical energy storage system.

8. The fire safety and extinguishing system according to any of claims 1-7, comprising a pump configured to pressurize at least the extracted water provided to the fire extinguisher.

9. The fire safety and extinguishing system according to claim 8, wherein the pump is configured to increase its pumping power in response to a detected hot spot abnormality.

10. The fire safety and extinguishing system according to any of claims 8-9, wherein the pump is arranged to pressurize a flow of ethylene glycol and water mixture into the cooling reservoir and cooling plates of a cooling system for the electrical energy storage system.

11. The fire safety and extinguishing system according to any of claims 1-10, comprising a fluid line from the cooling reservoir to a three-way valve, and a fluid line from one outlet of the three-way valve to an inlet of the housing, and a fluid line from the three-way valve to the liquid separator.

12. The fire safety and extinguishing system according to claim 11, the three-way valve being controllable to selectively provide ethylene glycol and water mixture to the inlet of the housing and to the liquid separator.

13. The fire safety and extinguishing system according to claim 1, comprising:
at least one chemical storage in the housing of the electrical energy storage system, the chemical storage holding a chemical that form a fire extinguishing agent in the form of a foam if mixed with water or an ethylene glycol and water mixture,
the fire extinguisher comprising a set of chemical spray nozzles inside the housing, the chemical spray nozzles being connected to the at least one chemical storage to dispense the chemical inside the housing, the first extinguisher further comprising a set of nozzles configured to dispense water or an ethylene glycol and water mixture jointly with the chemical spray nozzles such that a fire extinguishing foam is provided inside the housing, or
wherein the chemical storage is a set of cartridges located in the fluid path inside each of a set of nozzles of the fire extinguisher configured to dispense water or an ethylene glycol and water mixture, wherein the water or ethylene glycol and water mixture is mixed with the chemical in the cartridges inside the nozzle so that the nozzle dispense a fire extinguishing foam as the extinguishing agent, the system further comprising:
set of sensors for detecting a hot spot abnormality in respective zones of the electrical energy storage system, each zone having associated fire extinguisher nozzles of the fire extinguisher to dispense a fire extinguishing agent, wherein only fire extinguisher nozzles surrounding the zone where a hot spot abnormality is detected are activated to dispense a fire extinguishing agent,
wherein the nozzles of the fire extinguisher that dispense water or an ethylene glycol and water mixture are formed in cooling plates of the electrical energy storage system.

14. A vehicle comprising the fire safety and extinguishing system according to any of claims 1-13.

15. A method for activating a fire safety and extinguishing system of an electrical energy storage system, comprising,
detecting a hot spot abnormality in the electrical energy storage system;
receiving, by a liquid separator, an ethylene glycol and water mixture from a cooling reservoir,
separating, by the liquid separator, water from the ethylene glycol and water mixture,
providing the extracted water to an inlet of the electrical energy storage system to provide the extracted water to a fire extinguisher installed inside a housing of the electrical energy storage system, as the extinguishing agent,
dispensing, by the fire extinguisher, the extinguishing agent towards the detected hot spot abnormality.
